# EUROPÄISCHE PATENTSCHRIFT

(11) **EP 4 352 495 B1**
(45) Veröffentlichungstag und Bekanntmachung des Hinweises auf die Patenterteilung: **03.12.2025**
(21) Anmeldenummer: 22733005.7
(22) Anmeldetag: 08.06.2022
(51) Int. Cl.: G01N 21/85, G01N 21/84

(54) **FARBÜBERWACHUNGSANORDNUNG FÜR EIN RÖSTGUT, RÖSTERANORDNUNG SOWIE VERFAHREN ZUM RÖSTEN DES RÖSTGUTES**
COLOR-MONITORING ASSEMBLY FOR A ROASTING MATERIAL, ROASTER ASSEMBLY AND METHOD FOR ROASTING THE ROASTING MATERIAL
ENSEMBLE DE SURVEILLANCE DE COULEUR D'UN MATÉRIAU DE TORRÉFACTION, ENSEMBLE TORRÉFACTEUR ET PROCÉDÉ DE TORRÉFACTION DU MATÉRIAU DE TORRÉFACTION

(30) Priorität: 09.06.2021 DE 102021114895
(43) Veröffentlichungstag der Anmeldung: 17.04.2024
(73) Patentinhaber: PROBAT SE, 46446 Emmerich (DE)
(72) Erfinder: MÖLLER-WILLENBERG, Uwe, 46446 Emmerich (DE); KOZIOROWSKI, Thomas, 46446 Emmerich (DE)
(74) Vertreter: terpatent PartGmbB
(86) Internationale Anmeldenummer: PCT/EP2022/065489
(87) Internationale Veröffentlichungsnummer: WO 2022/258661

(56) Entgegenhaltungen:
- DE-A1- 3 720 388
- JP-A- 2013 066 599
- US-B1- 9 554 738

## Beschreibung

Die Erfindung betrifft eine Farbüberwachungsanordnung zur Einführung in einen Röstraum eines Röstbehälters zur Überwachung eines Röstguts. Die Erfindung betrifft ebenfalls eine Rösteranordnung sowie ein Verfahren zum Rösten des Röstgutes.

Eine Farbüberwachungsanordnung für Röstgut, wie zum Beispiel jegliches pflanzliches Schüttgut, wie Kaffeebohnen, Getreide, Kakao, etc. ist aus der deutschen Offenlegungsschrift 37 20 388 A1 bekannt. Diese Druckschrift offenbart hierbei eine Anordnung, die einen Lichtsender mit mindestens einer Lichtquelle zur Beleuchtung des Röstgutes, optische Mittel zur Einspeisung eines reflektierten Lichtstrahles in eine Lichtleiteranordnung und eine Auswerteeinheit aufweist, wobei die Lichtleiteranordnung mit der Auswerteeinheit zur Bildung zumindest eines Farbwertes für das Röstgut, der durch Quotientenbildung für mindestens zwei Lichtwellenlängen *λ*₁, *λ*₂ der jeweiligen Reflexionsmessung, der Lichtstärke des einfallenden Lichtes zur der Lichtstärke des reflektierten Lichtes ermittelbar ist, steuerungstechnisch verbunden ist. Hiermit kann ein Verfahren, bei dem anhand eines ermittelten Farbwertes des Röstgutes die Steuergrößen, Rösttemperatur und Röstdauer überprüft beziehungsweise angepasst werden sollen, durchgeführt werden. Hierzu findet eine Differenzbildung einer Lichtstärke L₁ eines einfallenden Lichtes zu der zugehörigen Lichtstärke L₂ des reflektierten Lichtes (Reflexionsmessung) für mindestens zwei Lichtwellenlängen *λ*₁, *λ*₂ statt. Die Quotientenbildung der beiden Reflexionsmessungen der jeweiligen Wellenlängen eliminiert hierbei Fehler, die bei der Messung des reflektierenden Lichtstrahles aufgrund der besonderen Randbedingungen auftreten können. Eine derartige Anordnung, beziehungsweise ein derartiges Verfahren zur Überwachung der Farbe von bewegtem Röstgut konnte sich am Markt jedoch nicht durchsetzen, da die Farbüberwachungsanordnung zu komplex im Aufbau war und die Lichteinspeisung sowohl in den Röstbehälter als auch in den Lichtleiter zum Beispiel aufgrund einer heißen und staubhaltigen Atmosphäre im Röstbehälter zu fehlerbehaftet und ungenau ist. Darüberhinaus wird in der US 9 554 738 B1 eine Messanordnung aus dem medizinischen Bereich beschrieben, die nicht-invasiv eingesetzt wird und bei der die Lichtleiteranordnung als Y-Lichtleiter ausgebildet ist, wobei die zwei Lichtleiter zur Weiterleitung ausgesendeten Lichtes und zur Weiterleitung reflektierten Lichtes ausgebildet sind. Des Weiteren ist aus der JP 2013 066599 A ein Messinstrument zur optischen Kohärenztomografie bekannt, bei der eine Reinigungsdüse vorgesehen ist. Auch dieses Messinstrument ist lediglich äußerlich beispielsweise zur Augenuntersuchung einsetzbar. Sie können nicht in einem Röstraum eines Röstbehälters eingesetzt werden.

Aufgabe der Erfindung ist es daher, die oben genannten Nachteile auf einfache und kostengünstige Weise zu vermeiden.

Diese Aufgabe wird durch eine Farbüberwachungsanordnung zur Einführung in einen Röstraum eines Röstbehälters zur Überwachung eines Röstgutes gelöst, die einen Lichtsender mit mindestens einer Lichtquelle zur Beleuchtung des Röstgutes, optische Mittel zur Einspeisung eines reflektierten Lichtstrahles in eine Lichtleiteranordnung und eine Auswerteeinheit aufweist, wobei die Lichtleiteranordnung mit der Auswerteeinheit zur Bildung zumindest eines Farbwertes für das Röstgut, der durch Quotientenbildung für mindestens zwei Lichtwellenlängen *λ*₁, *λ*₂ der jeweiligen Reflexionsmessung, der Lichtstärke des einfallenden Lichtes zur der Lichtstärke des reflektierten Lichtes ermittelbar ist, steuerungstechnisch verbunden ist, wobei eine Messsonde vorgesehen ist, die die Lichtleiteranordnung aufweist, die in eine erste Öffnung an einem ersten Ende in die Messsonde geführt ist und die am Röstraum befestigbar ausgebildet ist, wobei die Lichtleiteranordnung einen ersten Lichtleiter zur Weiterleitung des von dem Lichtsender ausgesendeten Lichtes und einen zweiten Lichtleiter zur Weiterleitung des reflektierten Lichtes an einen Lichtempfänger aufweist, wobei die Lichtleiteranordnung als Y-Lichtleiter ausgebildet ist, wobei der erste Lichtleiter mit dem Lichtsender und der zweite Lichtleiter mit dem Lichtempfänger verbunden sind und ein Einzellichtleiter durch die erste Öffnung in die Messsonde geführt ist, wobei die optischen Mittel am Ende des Einzellichtleiters zur Einspeisung eines von der Lichtquelle ausgesendeten Lichtstrahles als auch eines vom Röstgut reflektierten Lichtstrahles an einer zweiten Öffnung an einem zweiten Ende der Messsonde vorgesehen sind. Die Messsonde kann hier in einfacher Weise als längliches Bauteil ausgeführt sein, wobei das erste Ende dem zweiten Ende gegenübergelegen ist. Durch die Integration der Lichteinspeisung sowohl des ausgesendeten Lichtstrahles als auch des reflektierten Lichtstrahles in die Messsonde wird eine besonders einfache und kompakte Farbüberwachungsanordnung zur Ermittlung eines Farbwertes ermöglicht. Insbesondere ist eine derartige Messsonde besonders geeignet, um in einen Röstbehälter hineinzureichen. Es sei hierbei angemerkt, dass unter den Begriff Farbwert auch mittels mathematischer Modelle ermittelte Vergleichswerte von bekannten Farblaborgeräten verstanden werden.

In besonders vorteilhafter Weise sind die optischen Mittel zur Einspeisung des ausgesendeten Lichtstrahles als auch des reflektierten Lichtstrahles als Sammellinse ausgebildet.

Eine besonders einfach herzustellende Farbüberwachungsanordnung, deren Lichtsender keine besondere Kühlung bedarf, wird dadurch ermöglicht, dass der Lichtsensor mindestens eine LED oder mindestens einen Laser als Lichtquelle aufweist. Hierdurch ist es auf einfache Weise möglich, sehr genau die gewünschten Wellenlängen des aus zu sendenden Lichtes zu erzeugen.

Als besonders vorteilhafte Lichtwellenpaarungen haben sich die Lichtwellenlänge *λ*₁= 960-970 nm und die Lichtwellenlänge *λ*₂ = 1550 nm erwiesen.

Um die zweite Öffnung und damit auch die in diesem Bereich vorgesehenen optischen Mittel frei von Wasserdampf oder auch von Schmutzpartikeln zu halten, weist die Messsonde einen Spülluftanschluss zur Verbindung mit einer Spülluftarmatur und einer Luftleitanordnung im Bereich der optischen Mittel auf, wobei Spülluft in die Messsonde führbar ist, um die zur zweiten Öffnung der Messsonde gerichtete Seite der optischen Mittel frei von Schmutz und Beschlag zu halten. Hierdurch ist es auf besonders einfache Art und Weise möglich, sowohl die zur Innenseite gerichtete Seite der optischen Mittel als auch die in den Röstbehälter hinein gerichtete Seite der optischen Mittel mit Spülluft zu umgeben und folglich in optimalen Zustand zu halten bzw. zu kühlen, wenn die Sonde direkt im Röstbehälter verbaut ist.

In besonders vorteilhafter Weise weist der Lichtsender Lichtquellen oder Filtermittel auf, um Licht mit unterschiedlichen Lichtwellenlängen zu erzeugen, wobei der Lichtempfänger Mittel aufweist, um Licht unterschiedlicher Lichtwellenlängen zu verarbeiten. Hierbei ist es besonders vorteilhaft, wenn die Lichtquellen zur Erzeugung von Licht mit unterschiedlichen Lichtwellenlängen unterschiedlich ausgebildete LED's oder Laser sind. Hierbei ist es insbesondere vorteilhaft, wenn der Lichtsender steuerungstechnisch mit dem Lichtempfänger verbunden ist, um die jeweilige, ausgesendete Lichtwellenlänge an den Lichtempfänger zu übermitteln und auf diese Weise eine sichere Verarbeitung zur Quotientenbildung gewährleistet wird.

In einer besonders vorteilhaften Ausführungsform weist die Messsonde an der zum Röstbehälter gerichteten Ende eine demontierbare Kappe mit der zweiten Öffnung auf, um die Messsonde auf einfache Weise warten und reinigen zu können, ohne den Einzellichtleiter entfernen zu müssen.

Die Aufgabe wird ebenfalls gelöst durch eine Rösteranordnung mit einem Röster, der einen Röstbehälter, der einen Röstraum definiert, mit einer vorgenannten Farbüberwachungsanordnung, wobei eine Röstersteuereinheit des Rösters steuerungstechnisch mit der Auswerteeinheit der Farbüberwachungsanordnung verbunden ist, wobei die Messsonde derart an den Röstbehälter angeordnet ist, dass das zweite Ende der Messsonde in den Röstraum hineinreicht.

In besonders vorteilhafter Weise ist der in der Auswerteeinheit ermittelte Farbwert als Steuergröße für die Röstersteuereinheit zur Ermittlung des Röstgrades einsetzbar. Hierbei kann der Farbwert auch in Vergleichswerte von bekannten Farblaborgeräten, wie z. B. Colorette 4, Agtron, etc. sein, um auf einfache Weise an vorhandenen Röstersteuereinheiten angeschlossen zu werden.

Üblicherweise ist ein Temperatursensor für den Röstraum vorgesehen, wobei in der Röstersteuereinheit ein maximaler Temperaturwert Tₘₐₓ zum Abbruch des Röstprozesses hinterlegt ist.

Die Aufgabe wird ebenfalls gelöst durch ein Verfahren zum Rösten eines Röstgutes in einem Röstbehälter einer derartigen Rösteranordnung, wobei der Röstprozess beendet wird, sobald der ermittelte Farbwert mit einem in der Röstersteuereinheit hinterlegten Sollfarbwert übereinstimmt. In vorteilhafter Weise ist zusätzlich ein maximaler Temperaturwert Tₘₐₓ hinterlegt, bei dessen Erreichen der Röstprozess abgebrochen wird.

Um zu verhindern, dass bei Beendigung des Röstprozesses die optischen Mittel der Messsonde mit Wasserdampf belegt werden, ist es vorteilhaft, wenn gegen Ende des Rostprozesses die Spülluft zuvor erhöht wird. Hier hat sich eine Druckerhöhung der Spülluft auf bis zu 6 bar bereits vorteilhaft erwiesen.

Insbesondere zur 'Kommunikation bestehenden Röstersteuereinheiten ist es vorteilhaft, wenn der Farbwert mittels mathematischer Modelle in Vergleichswerte von Farblaborgeräten, wie z. B. Colorette 4, Agtron, etc. umgerechnet wird.

Die Erfindung wird anhand einer Zeichnung näher erläutert, hierbei zeigt:
Figur 1 eine schematische Darstellung von verschiedenen Rösteranordnungen mit einer Farbüberwachungsanordnung,
Figur 2 eine Detailansicht einer Messsonde, die an einem Röstbehälter angeordnet ist, und
Figur 3 eine Detailansicht der Messsonde aus Figur 2.

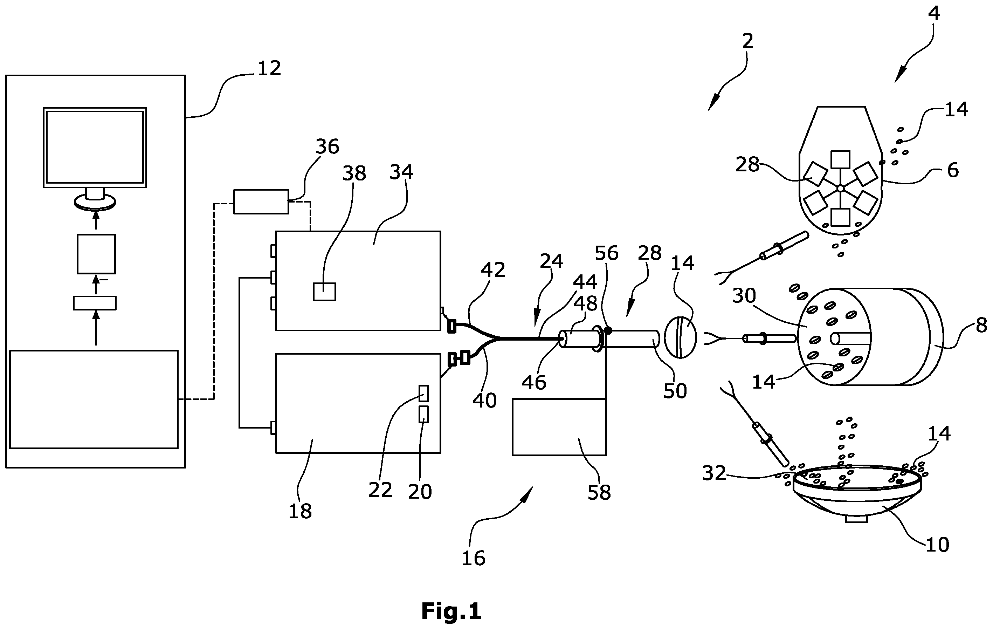

Figur 1 zeigt eine schematische Darstellung einer erfindungsgemäßen Rösteranordnung 2. Die Rösteranordnung 2 weist im Wesentlichen einen Röster 4 auf, der im vorliegenden Ausführungsbeispiel durch drei alternativ einzusetzende Röstbehälter 6, 8, 10 dargestellt ist. Hierdurch soll schematisch dargestellt werden, dass die Rösteranordnung 2 nicht auf einen besonderen Röster 4 beschränkt ist. Der Röstbehälter 6 beschreibt hierbei einen Schaufelradröster, der Röstbehälter 8 einen Trommelröster und der Röstbehälter 10 einen Schalenröster. Der Röster 4 ist steuerungstechnisch mit einer Röstersteuereinheit 12 verbunden, die insbesondere den Röstprozess steuert. Als Röstgut 14 kann hierbei jegliches pflanzliches Schüttgut, wie Kaffeebohnen, Kakaobohnen oder auch Getreide eingesetzt werden.

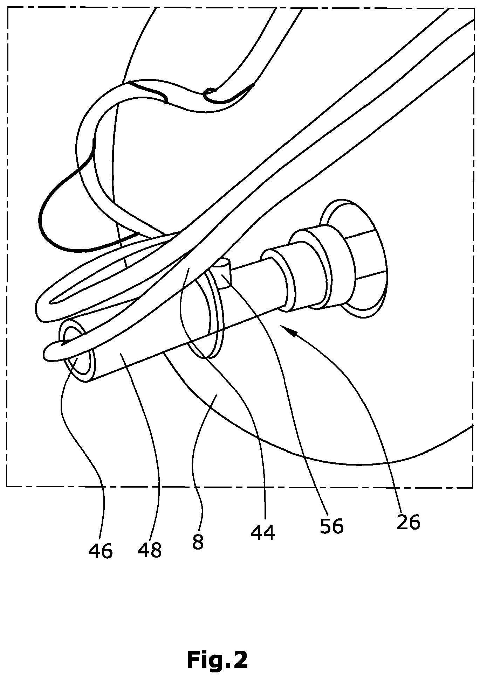

Die Rösteranordnung 2 weist zudem eine erfindungsgemäße Farbüberwachungsanordnung 16 auf, die für den jeweiligen Rösterbehälter 6, 8, 10 auch nachrüstbar ist. Die Farbüberwachungsanordnung 16 besitzt hierbei einen Lichtsender 18 mit im vorliegenden Ausführungsbespiel 2 hinsichtlich einer Lichtwellenlänge unterschiedlich als LED oder Laser ausgebildete Lichtquellen 20, 22. Der Lichtsender 18 ist über eine Lichtleiteranordnung 24 mit einer Messsonde 26 derart verbunden, dass das Röstgut 14 in dem jeweiligen Röstbehälter 6, 8, 10 mit Licht einer Lichtwellenlänge *λ*₁ der Lichtquelle 20 oder mit Licht einer Lichtwellenlänge *λ*₂ der Lichtquelle 22 beleuchtet wird. Hierzu ist die Messsonde 26 (wie in Figur 2 näher dargestellt) an dem jeweiligen Röstbehälter 6, 8, 10 befestigt und reicht in den jeweiligen Röstraum 28, 30, 32 hinein.

Des Weiteren weist die Farbüberwachungsanordnung 16 einen Lichtempfänger 34 und eine Auswerteeinheit 36 auf. In diesem Zusammenhang wird darauf hingewiesen, dass die vorliegende Darstellung lediglich rein schematisch ist und insbesondere der Lichtsender 18, der Lichtempfänger 34 und die Auswerteeinheit 36 auch in einem Gehäuse angeordnet sein können. Der Lichtempfänger 34 ist ebenfalls mit der Lichtleiteranordnung 24 wirkverbunden und empfängt das in die Messsonde 26 vom Röstgut 14 reflektierte Licht der Lichtwellenlängen *λ*₁ und λ₂. Hierzu weist der Lichtempfänger 34 insbesondere Mittel 38 auf, um Licht der unterschiedlichen Lichtwellenlängen *λ*₁ und *λ*₂ zu verarbeiten. Um dies auf besonders einfache Art und Weise zu ermöglichen, ist der Lichtsender 18 mit dem Lichtempfänger 34 steuerungstechnisch verbunden.

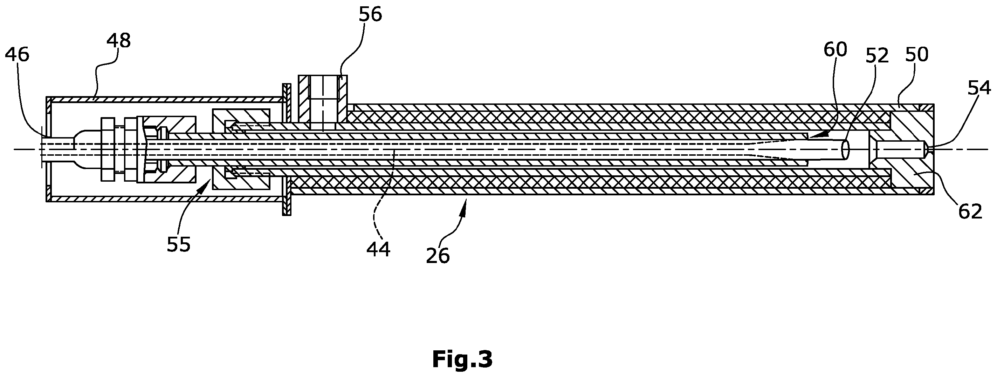

Die Lichtleiteranordnung 24 ist hier als Y-Lichtleiter ausgebildet, wobei ein erster Lichtleiter 40 mit dem Lichtsender 18 und ein zweiter Lichtleiter 42 mit dem Lichtempfänger 34 verbunden ist. Beide Lichtleiter 40, 42 werden auf bekannte Weise mit einem Einzellichtleiter 44 verbunden, der durch eine erste Öffnung 46 in die länglich ausgebildete Messsonde 26 geführt wird. Die erste Öffnung 46 ist hierbei an einem ersten Ende 48 der Messsonde vorgesehen. An einem dem ersten Ende 48 gegenübergelegenen Ende 50 ist (siehe hierzu Figur 3) am Ende der Einzellichtleiter 44 eine Sammellinse 52 als optisches Mittel zur Einspeisung des ausgesendeten Lichtstrahles in den jeweiligen Röstraum 28, 30, 32 und zur Einspeisung des vom Röstgut 14 reflektierten Lichtstrahles über eine zweite Öffnung 54 in den Einzellichtleiter 44 vorgesehen. Die Sammellinse 52 ist hierbei fest mit dem Einzellichtleiter 44 verbunden, der definiert fest über eine Befestigungsanordnung 55 in der Messsonde 26 fixiert ist.

Des Weiteren weist die Messsonde 26 einen Spülluftanschluss 56 auf, der mit einer Spülluftarmatur 58 verbunden ist. Hierdurch wird Spülluft unter Druck in die Messsonde 26 geführt, um die zur zweiten Öffnung 54 gerichtete Seite der Sammellinse 52 frei von Schmutz und Beschlag zu halten. Wie in Figur 3 dargestellt, ist der Einzellichtleiter 44 mit der Sammellinse 52 derart in einer Luftleitanordnung 60 vorgesehen, dass die Spülluft beim Verlassen der Messsonde über die zweite Öffnung 54 die Sammellinse 52 an der zur zweiten Öffnung 54 gerichteten Seite umspült und über diese auch die Messsonden 26 verlässt. Die Luftleitanordnung 60 besteht hierbei im Wesentlichen aus einem den Lichtleiter 44 umgebenden Kanal. Gleichzeitig kann somit keine Röstzuluft und Röstabluft in den Röstbehälter 6, 8, 10 gelangen, wodurch eine entsprechende Kühlung, durch Überdruck der Spülluft, des Systems erzielt wird. Um eine einfache Wartung und Reinigung zu gewährleisten, weist die Messsonde 26 an dem zum Röstbehälter 6, 8, 10 gerichteten Ende 50 eine demontierbare Kappe 62 mit der zweiten Öffnung 54 auf

Bei einem Verfahren zum Rösten eines Röstgutes in einer Rösteranordnung 2 mit einem der drei Röstbehälter 6, 8, 10 wird der Röstprozess über einen sogenannten Farbwert, der in der Röstersteuereinheit 12 für das betreffende Röstgut 14 hinterlegt ist, überwacht. Hierzu wird abwechselnd Licht mit den Lichtwellenlängen *λ*₁ und *λ*₂ durch den Lichtsender über die Lichtleiteranordnung 24 und die Sammellinse 52 auf das zu röstenden Röstgut in den jeweiligen Röstraum 28, 30, 32 gesendet. Das vom Röstgut reflektierte Licht wird wiederum über die Lichtleiteranordnung zum Lichtempfänger 34 geführt und mit Hilfe des vom Lichtsender 18 stammenden Signals zugeordnet an die Auswerteeinheit 36 übergeben. Hier findet dann eine Quotientenbildung der jeweiligen Reflexionsmessungen, einfallenden Lichtes zum reflektierten Licht für die jeweiligen Lichtwellenlängen *λ*₁, *λ*₂ statt. Aus der Quotientenbildung der Reflexionsmessungen der beiden Lichtwellenlängen *λ*₁, *λ*₂ kann dann der Farbwert bestimmt werden. Bei Erreichen des in der Röstersteuereinheit hinterlegten Farbwertes wird der Röstprozess beendet.

Zusätzlich ist in der Röstersteuereinheit 12 eine Röstend-Temperatur Tₘₐₓ hinterlegt, die verhindern soll, dass die Rösteranordnung 2 bei Falschmessungen der Messsonde 26 überhitzen kann. Bei Erreichen dieser Temperatur Tₘₐₓ wird der Röstprozess ebenfalls abgebrochen, d.h. dieser Temperaturgrenzwert Tₘₐₓ dient grundsätzlich als Sicherheitsfunktion um ein Überrösten zu verhindern.

## Patentansprüche

1. Farbüberwachungsanordnung zur Einführung in einen Röstraum (28) eines Röstbehälters (6, 8, 10) zur Überwachung eines Röstgutes (14), die einen Lichtsender (18) mit mindestens einer Lichtquelle (20, 22) zur Beleuchtung des Röstgutes (14), optische Mittel (52) zur Einspeisung eines reflektierten Lichtstrahles in eine Lichtleiteranordnung (24) und eine Auswerteeinheit (36) aufweist, wobei die Lichtleiteranordnung (24) mit der Auswerteeinheit (36) zur Bildung zumindest eines Farbwertes für das Röstgut (14), der durch Quotientenbildung der Reflexionsmessungen der Lichtstärke L₁ des einfallenden Lichtes zu der Lichtstärke L₂ des reflektierten Lichtes für mindestens zwei Lichtwellenlängen *λ*₁, *λ*₂ ermittelbar ist, steuerungstechnisch verbunden ist, wobei eine Messsonde (26) vorgesehen ist, die die Lichtleiteranordnung (24) aufweist, die in eine erste Öffnung (46) an einem ersten Ende (48) in die Messsonde (26) geführt ist und die am Röstraum (6, 8, 10) befestigbar ausgebildet ist, wobei die Lichtleiteranordnung (24) einen ersten Lichtleiter (40) zur Weiterleitung des von dem Lichtsender (18) ausgesendeten Lichtes und einen zweiten Lichtleiter (42) zur Weiterleitung des reflektierten Lichtes an einen Lichtempfänger (34) aufweist, wobei die Lichtleiteranordnung (24) als Y-Lichtleiter ausgebildet ist, wobei der erste Lichtleiter (40) mit dem Lichtsender (18) und der zweite Lichtleiter (42) mit dem Lichtempfänger (34) verbunden sind und ein Einzellichtleiter (44) durch die erste Öffnung (46) in die Messsonde (26) geführt ist, wobei die optischen Mittel (52) am Ende des Einzellichtleiters (44) zur Einspeisung eines von der Lichtquelle (20, 22) ausgesendeten Lichtstrahles als auch eines vom Röstgut (14) reflektierten Lichtstrahles an einer zweiten Öffnung (54) an einem zweiten Ende (50) der Messsonde (26) vorgesehen sind.

2. Farbüberwachungsanordnung nach Anspruch 1, **dadurch gekennzeichnet, dass** die optischen Mittel (52) zur Einspeisung des ausgesendeten Lichtstrahles als auch des reflektierten Lichtstrahles als Sammellinse ausgebildet sind.

3. Farbüberwachungsanordnung nach einem der -Anspruch 1 oder 2, **dadurch gekennzeichnet, dass** der Lichtsender (18) mindestens eine LED (20, 22) oder mindestens einen Laser als Lichtquelle aufweist.

4. Farbüberwachungsanordnung nach einem der vorhergehenden Ansprüche, **dadurch gekennzeichnet, dass** die Lichtwellenlänge *λ*₁ = 960-970 nm und die Lichtwellenlänge *λ*₂ = 1550 nm betragen.

5. Farbüberwachungsanordnung nach einem der vorhergehenden Ansprüche, **dadurch gekennzeichnet, dass** die Messsonde (26) einen Spülluftanschluss (56) zur Verbindung mit einer Spülluftarmatur (58) und einer Luftleitanordnung (60) im Bereich der optischen Mittel (52) aufweist, wobei Spülluft in die Messsonde (26) führbar ist, um die zur zweiten Öffnung (54) der Messsonde (26) gerichtete Seite der optischen Mittel (52) frei von Schmutz und Beschlag zu halten.

6. Farbüberwachungsanordnung nach einem der vorhergehenden Ansprüche, **dadurch gekennzeichnet, dass** der Lichtsender (18) Lichtquellen (20, 22) oder Filtermittel aufweist, um Licht mit unterschiedlichen Lichtwellenlängen *λ*₁, *λ*₂ zu erzeugen, wobei der Lichtempfänger (34) Mittel (38) aufweist, um Licht unterschiedlicher Lichtwellenlängen *λ*₁, *λ*₂ zu verarbeiten.

7. Farbüberwachungsanordnung nach Anspruch 6, **dadurch gekennzeichnet, dass** die Lichtquellen (20, 22) zur Erzeugung von Licht mit unterschiedlichen Lichtwellenlängen *λ*₁, *λ*₂ unterschiedlich ausgebildete LED's oder Laser sind.

8. Farbüberwachungsanordnung nach Anspruch 6 oder 7, **dadurch gekennzeichnet, dass** der Lichtsender (18) steuerungstechnisch mit dem Lichtempfänger (34) verbunden ist, um die jeweilige, ausgesendete Lichtwellenlänge an den Lichtempfänger (34) zu übermitteln.

9. Farbüberwachungsanordnung nach einem der vorhergehenden Ansprüche, **dadurch gekennzeichnet, dass** die Messsonde (26) an dem zum Röstbehälter (6, 8, 10) gerichteten Ende (50) eine demontierbare Kappe (62) mit der zweiten Öffnung (54) aufweist.

10. Rösteranordnung mit einem Röster (4), der einen Röstbehälter (6, 8, 10), der einen Röstraum (28, 30, 32) definiert, aufweist, mot einer Farbüberwachungsanordnung (16) nach einem der vorhergehenden Ansprüche, wobei eine Röstersteuereinheit (12) des Rösters (4) steuerungstechnisch mit der Auswerteeinheit (36) der Farbüberwachungsanordnung (16) verbunden ist, wobei die Messsonde (26) derart an dem Röstbehälter (6, 8, 10) angeordnet ist, dass das zweite Ende der Messsonde (26) in den Röstraum (28, 30, 32) hineinreicht.

11. Rösteranordnung nach Anspruch 9, **dadurch gekennzeichnet, dass** der in der Auswerteeinheit (36) ermittelte Farbwert als Steuergröße für die Röstersteuereinheit (12) zur Ermittlung des Röstgrades einsetzbar ist.

12. Rösteranordnung nach Anspruch 10, **dadurch gekennzeichnet, dass** ein Temperatursensor für den Röstraum (28, 30, 32) vorgesehen ist, wobei in der Röstersteuereinheit (12) ein maximaler Temperaturwert Tₘₐₓ zum Abbruch des Röstprozesses hinterlegt ist.

13. Verfahren zum Rösten eines Röstgutes (14) in einem Röstbehälter (6, 8, 10) einer Rösteranordnung (2) nach einem der Ansprüche 10 - 12, wobei der Röstprozess beendet wird, sobald der ermittelte Farbwert mit einem in der Röstersteuereinheit (12) hinterlegten Soll-Farbwert übereinstimmt.

14. Verfahren zum Rösten eines Röstgutes (14) nach Anspruch 13, **dadurch gekennzeichnet, dass** ein maximaler Temperaturwert Tₘₐₓ hinterlegt ist, bei dessen Erreichen der Röstprozess abgebrochen wird.

15. Verfahren zum Rösten eines Röstgutes nach einem der Ansprüche 13 oder 14, **dadurch gekennzeichnet, dass** gegen Ende des Röstprozesses die Spülluftzufuhr erhöht wird.

16. Verfahren zum Rösten eines Röstgutes nach einem der Ansprüche 13 oder 15, **dadurch gekennzeichnet, dass** der Farbwert mittels mathematischer Modelle in Vergleichswerte von Farblaborgeräten wie z. B. Colorette 4, Agtron, etc. umgerechnet wird.

## Claims

1. Color-monitoring assembly for insertion into a roasting chamber (28) of a roasting container (6, 8, 10) for monitoring a roasting material (14), which comprises a light sender (18) with at least one light source (20, 22) for illuminating the roasting material (14), optical means (52) for feeding a reflected light beam into a light guide arrangement (24), and an evaluation unit (36), wherein the light guide arrangement (24) is connected for control purposes to the evaluation unit (36) for forming at least one color value for the roasting material (14), which color value can be determined by calculating the quotient of the reflection measurements of the light intensity L1 of the incident light to the light intensity L2 of the reflected light for at least two light wavelengths λ1, λ2, wherein a measuring probe (26) is provided, which comprises the light guide arrangement (24), which is guided into a first opening (46) at a first end (48) in the measuring probe (26) and which is designed so that it can be fixed to the roasting chamber (6, 8, 10), wherein the light guide arrangement (24) comprises a first light guide (40) for conducting the light which is emitted by the light sender (18) and a second light guide (42) for conducting the reflected light to a light receiver (34), wherein the light guide arrangement (24) is designed as a Y-light guide, wherein the first light guide (40) is connected to the light sender (18) and the second light guide (42) is connected to the light receiver (34), and a single light guide (44) is guided through the first opening (46) into the measuring probe (26), wherein the optical means (52) are provided at the end of the single light guide (44) for feeding a light beam which is emitted by the light source (20, 22) as well as a light beam which is reflected by the roasting material (14) at a second opening (54) at a second end (50) of the measuring probe (26).

2. Color-monitoring assembly according to claim 1, **characterized in that** the optical means (52) for feeding in the emitted light beam as well as the reflected light beam are designed as a converging lens.

3. Color-monitoring assembly according to one of claims 1 or 2, **characterized in that** the light sender (18) comprises at least one LED (20, 22) or at least one laser as a light source.

4. Color-monitoring assembly according to one of the preceding claims, **characterized in that** the light wavelength λ₁ = 960-970 nm and the light wavelength λ₂ = 1550 nm.

5. Color-monitoring assembly according to one of the preceding claims, **characterized in that** the measuring probe (26) comprises a purge air connection (56) for connection to a purge air armature (58) and to an air guide arrangement (60) in the area of the optical means (52), wherein purge air can be fed into the measuring probe (26) in order to keep that side of the optical means (52) which faces the second opening (54) of the measuring probe (26) free of dirt and condensation.

6. Color-monitoring assembly according to one of the preceding claims, **characterized in that** the light sender (18) comprises light sources (20, 22) or filter means for generating light with different light wavelengths λ1, λ2, wherein the light receiver (34) comprises means (38) for processing light of different light wavelengths λ1, λ2.

7. Color-monitoring assembly according to claim 6, **characterized in that** the light sources (20, 22) for generating light with different light wavelengths λ1, λ2 are differently designed LEDs or lasers.

8. Color-monitoring assembly according to claim 6 or 7, **characterized in that** the light sender (18) is connected to the light receiver (34) for control purposes in order to transmit the respective emitted light wavelength to the light receiver (34).

9. Color-monitoring assembly according to one of the preceding claims, **characterized in that** the measuring probe (26) comprises a removable cap (62) with the second opening (54) at the end (50) which is directed toward the roasting container (6, 8, 10).

10. Roaster assembly comprising a roaster (4) which comprises a roasting container (6, 8, 10) which defines a roasting chamber (28, 30, 32), a color-monitoring assembly (16) according to one of the preceding claims, wherein a roaster control unit (12) of the roaster (4) is connected for control purposes to the evaluation unit (36) of the color-monitoring assembly (16), wherein the measuring probe (26) is arranged on the roasting container (6, 8, 10) in such a way that the second end of the measuring probe (26) extends into the roasting chamber (28, 30, 32).

11. Roaster assembly according to claim 9, **characterized in that** the color value which is determined in the evaluation unit (36) can be used as a control variable for the roaster control unit (12) for determining the degree of roasting.

12. Roaster assembly according to claim 10, **characterized in that** a temperature sensor for the roasting chamber (28, 30, 32) is provided, wherein a maximum temperature value Tmax for terminating the roasting process is stored in the roaster control unit (12).

13. Method for roasting a roasting material (14) in a roasting container (6, 8, 10) of a roaster assembly (2) according to one of claims 10-12, wherein the roasting process is terminated as soon as the determined color value matches a target color value which is stored in the roaster control unit (12).

14. Method for roasting a roasting material (14) according to claim 13, **characterized in that** a maximum temperature value Tmax is stored, upon reaching of which the roasting process is terminated.

15. Method for roasting a roasting material according to one of claims 13 or 14, **characterized in that** the purge air supply is increased near the end of the roasting process.

16. Method for roasting a roasting material according to one of claims 13 or 15, **characterized in that** the color value is converted into comparative values of color laboratory devices such as Colorette 4, Agtron, etc. using mathematical models.

## Revendications

1. Agencement de surveillance de couleur pour l'introduction dans un espace de torréfaction (28) d'un récipient de torréfaction (6, 8, 10) pour la surveillance d'un bien de torréfaction (14), qui présente un émetteur de lumière (18) avec au moins une source de lumière (20, 22) pour l'éclairage du bien de torréfaction (14), des moyens optiques (52) pour l'alimentation d'un rayon lumineux réfléchi dans un agencement de guidage de lumière (24) et une unité d'évaluation (36),
dans lequel l'agencement de guidage de lumière (24) est connecté au niveau technique avec l'unité d'évaluation (36) pour la formation d'au moins une valeur de couleur pour le bien de torréfaction (14), qui peut être déterminée par quotientage de la mesure de réflexion de l'intensité lumineuse L1 du lumière incident à l'intensité lumineuse L2 du lumière réfléchi pour au moins deux longueurs d'onde de lumière λ1, λ2,
dans lequel une sonde de mesure (26) est prévue, qui présente l'agencement de guidage de lumière (24), qui est guidée dans une première ouverture (46) à une première extrémité (48) dans la sonde de mesure (26) et qui est réalisée de manière à pouvoir être fixée à l'espace de torréfaction (6, 8, 10), dans lequel l'agencement de guidage de lumière (24) présente un premier guide de lumière (40) pour la transmission du lumière émis par l'émetteur de lumière (18) et un deuxième guide de lumière (42) pour la transmission du lumière réfléchi à un récepteur de lumière (34),
dans lequel l'agencement de guidage de lumière (24) est réalisé sous forme de guide de lumière en Y,
dans lequel le premier guide de lumière (40) est connecté à l'émetteur de lumière (18) et le deuxième guide de lumière (42) est connecté au récepteur de lumière (34) et un guide de lumière individuel (44) est guidé par la première ouverture (46) dans la sonde de mesure (26),
dans lequel les moyens optiques (52) sont prévus à l'extrémité du guide de lumière individuel (44) pour l'alimentation d'un rayon lumineux émis par la source de lumière (20, 22) ainsi que d'un rayon lumineux réfléchi par le bien de torréfaction (14) à une deuxième ouverture (54) à une deuxième extrémité (50) de la sonde de mesure (26).

2. Agencement de surveillance de couleur selon la revendication 1, **caractérisé en ce que** les moyens optiques (52) pour l'alimentation du rayon lumineux émis ainsi que du rayon lumineux réfléchi sont réalisés sous forme de lentille de collecte.

3. Agencement de surveillance de couleur selon l'une des revendications 1 ou 2, **caractérisé en ce que** l'émetteur de lumière (18) présente au moins une LED (20, 22) ou au moins un laser en tant que source de lumière.

4. Agencement de surveillance de couleur selon l'une des revendications précédentes, **caractérisé en ce que** la longueur d'onde de lumière λ₁ = 960-970 nm et la longueur d'onde de lumière λ2 = 1550 nm.

5. Agencement de surveillance de couleur selon l'une des revendications précédentes, **caractérisé en ce que** la sonde de mesure (26) présente un raccord d'air de purge (56) pour la connexion avec une armature d'air de purge (58) et un agencement de guidage de lumière (60) dans la zone des moyens optiques (52), dans lequel l'air de purge peut être guidé dans la sonde de mesure (26), afin de maintenir le côté des moyens optiques (52) dirigé vers la deuxième ouverture (54) de la sonde de mesure (26) exempt de saleté et de brouillard.

6. Agencement de surveillance de couleur selon l'une des revendications précédentes, **caractérisé en ce que** l'émetteur de lumière (18) présente des sources de lumière (20, 22) ou des moyens de filtrage, afin de générer de la lumière avec des longueurs d'onde de lumière différentes λ1, λ2, dans lequel le récepteur de lumière (34) présente des moyens (38), afin de traiter la lumière avec des longueurs d'onde de lumière différentes λ1, λ2.

7. Agencement de surveillance de couleur selon la revendication 6, **caractérisé en ce que** les sources de lumière (20, 22) pour la génération de lumière avec des longueurs d'onde de lumière différentes λ1, λ2 sont des LED ou des lasers réalisés de manière différente.

8. Agencement de surveillance de couleur selon la revendication 6 ou 7, **caractérisé en ce que** l'émetteur de lumière (18) est connecté au niveau technique avec le récepteur de lumière (34), afin de transmettre la longueur d'onde de lumière émise respective au récepteur de lumière (34).

9. Agencement de surveillance de couleur selon l'une des revendications précédentes, **caractérisé en ce que** la sonde de mesure (26) présente à l'extrémité (50) dirigée vers le récipient de torréfaction (6, 8, 10) une capuchon démontable (62) avec la deuxième ouverture (54).

10. Agencement de torréfaction avec un torréfacteur (4), qui présente un récipient de torréfaction (6, 8, 10), qui définit un espace de torréfaction (28, 30, 32), avec un agencement de surveillance de couleur (16) selon l'une des revendications précédentes, dans lequel une unité de commande de torréfaction (12) du torréfacteur (4) est connectée au niveau technique avec l'unité d'évaluation (36) de l'agencement de surveillance de couleur (16), dans lequel la sonde de mesure (26) est disposée de manière à pouvoir être fixée au récipient de torréfaction (6, 8, 10), de sorte que la deuxième extrémité de la sonde de mesure (26) pénètre dans l'espace de torréfaction (28, 30, 32).

11. Agencement de torréfaction selon la revendication 9, **caractérisé en ce que** la valeur de couleur déterminée dans l'unité d'évaluation (36) peut être utilisée en tant que grandeur de commande pour l'unité de commande de torréfaction (12) pour la détermination du degré de torréfaction.

12. Agencement de torréfaction selon la revendication 10, **caractérisé en ce qu'**un capteur de température pour l'espace de torréfaction (28, 30, 32) est prévu, dans lequel une valeur de température maximale Tmax pour l'arrêt du processus de torréfaction est déposée dans l'unité de commande de torréfaction (12).

13. Méthode de torréfaction d'un bien de torréfaction (14) dans un récipient de torréfaction (6, 8, 10) d'un agencement de torréfaction (2) selon l'une des revendications 10 à 12, dans lequel le processus de torréfaction est terminé, dès que la valeur de couleur déterminée coïncide avec une valeur de couleur de consigne déposée dans l'unité de commande de torréfaction (12).

14. Méthode de torréfaction d'un bien de torréfaction (14) selon la revendication 13, **caractérisé en ce qu'**une valeur de température maximale Tmax est déposée, à l'atteinte de laquelle le processus de torréfaction est interrompu.

15. Méthode de torréfaction d'un bien de torréfaction selon l'une des revendications 13 ou 14, **caractérisé en ce que** à la fin du processus de torréfaction l'alimentation en air de purge est augmentée.

16. Méthode de torréfaction d'un bien de torréfaction selon l'une des revendications 13 ou 15, **caractérisé en ce que** la valeur de couleur est convertie par un modèle mathématique dans des valeurs de comparaison d'appareils de travail de couleur tels que B. Colorette 4, Agtron, etc.
